# EUROPEAN PATENT APPLICATION

(11) **EP 3 573 295 A1**
(43) Date of publication of application: **27.11.2019**
(21) Application number: 18741055.0
(22) Date of filing: 15.01.2018
(51) Int. Cl.: H04L 12/749, H04L 12/713

(54) **GATEWAY DEVICE, NETWORK ADDRESS TRANSLATION DEVICE, COMMUNICATION SYSTEM, COMMUNICATION METHOD, AND PROGRAM**

(30) Priority: 17.01.2017 JP 2017006107
(71) Applicant: NEC Corporation, Tokyo 108-8001 (JP)
(72) Inventor: ENDOU, Morihisa, Tokyo 108-8001 (JP)
(74) Representative: Betten & Resch
(86) International application number: PCT/JP2018/000791
(87) International publication number: WO 2018/135428

(57) **Abstract**

The present invention supplies a fixed global IP address(es) to a subscriber(s) without performing synchronization processing in network address translation apparatuses having a redundant configuration. A gateway apparatus includes: a selection part that selects one network address translation apparatus from a plurality of network address translation apparatuses redundantly storing a global IP address(es) allocated to a terminal(s) of a subscriber(s); and a forwarding part that forwards a packet(s) received from the terminal(s) to the selected network address translation apparatus.

## Description

### TECHNICAL FIELD

### (REFERENCE TO RELATED APPLICATION)

The present invention is based upon and claims the benefit of the priority of Japanese patent application No. 2017-006107, filed on January 17, 2017, the disclosure of which is incorporated herein in its entirety by reference thereof.

The present invention relates to a gateway apparatus, a network address translation apparatus, a communication system, a communication method, and a program. In particular, it relates to a gateway apparatus arranged between network address translation apparatuses having a redundant configuration and subscriber terminals, a larger-scale network address translator (LSNAT) such as a carrier grade NAT (CGNAT), a communication system including these apparatuses, a communication method, and a program.

### BACKGROUND ART

When redundancy of CGNATs (carrier grade network address translators) is realized in a service that always provides an individual subscriber with the same global IP (Internet protocol) address, a redundant configuration (an active and standby (ACT/SBY) configuration) based on a pair of CGNATs is normally used. When synchronization of ACT and SBY CGNATs is realized, by synchronizing NAT session information between the corresponding CGNATs forming a pair, the same global IP address can be provided to an individual subscriber even after the CGNATs are switched.

As a related technique, PTL 1 discusses a technique in which a standby NAT (network address translation) apparatus regularly monitors whether an event that needs switching of the systems, such as a failure in an active NAT apparatus, has occurred. According to this technique, if the standby NAT apparatus determines that switching of the systems is needed, this standby NAT apparatus switches to serve as an active NAT apparatus and switches the previously active NAT apparatus to a standby NAT apparatus.

In addition, PTL 2 discusses a technique in which one NAPT (network address port translator) and another NAPT regularly exchange a keepalive heartbeat data packet. According to this technique, if one NAPT detects no reply heartbeat from another NAPT, one NAPT takes over a global address(es) of another NAPT.

In addition, PTL 3 discusses a technique including an active NAT apparatus and a standby NAT apparatus. According to this technique, the active NAT apparatus forwards before- and after-address-translation packets to the standby NAT apparatus, and the standby NAT apparatus generates translation information for performing address translation from the before- and after-address-translation packets received from the active NAT apparatus.

### CITATION LIST

### PATENT LITERATURE

PTL 1: Japanese Patent Kokai Publication No. JP2012-209901A
PTL 2: Japanese Patent Kokai Publication No. JP2010-114665A
PTL 3: Japanese Patent Kokai Publication No. JP2010-114585A

### SUMMARY

### TECHNICAL PROBLEM

The entire contents disclosed in the above PTLs are incorporated herein by reference thereto. The following analysis has been made by the present inventor.

The communication systems based on the above redundant configurations have the following problem.
(1) Synchronization processing between a pair of ACT CGNAT and SBY CGNAT needs a broadband network. Since synchronization information is exchanged by the pair in a synchronization network, if the CGNATs accommodate a large number of subscribers, the synchronization traffic increases, and the band of the network managed by the operator is tightened. In addition, when ACT and SBY CGNATs are synchronized, if synchronization traffic that needs a broadband is taken into consideration, installation of a pair of ACT and SBY CGNATs at physically remote locations is difficult.
(2) When an external apparatus accesses an ACT/SBY node, a single virtual IP is set in the ACT/SBY node in advance, and the external apparatus transmits traffic to this virtual IP. Thus, the freedom in the configuration of the network and the installation of the apparatuses could be constrained, and subscribers could not effectively be accommodated in installed CGNAT facilities.
(3) In an operation using a pair of ACT and SBY nodes, if a failure occurs, an operation is performed by using one of the ACT and SBY nodes. Thus, the operator needs to fix the failure promptly, and an around-the-clock maintenance system needs to be maintained.

In addition, according to the techniques discussed in PTLs 1 and 2, when a standby NAT and an active NAT are switched, address translation information (for example, a NAT table) held in the active NAT needs to be transmitted to the standby NAT and synchronized. Thus, since the traffic for the synchronization temporarily increases, the band of the network managed by the operator could be tightened.

Likewise, according to the technique discussed in PTL 3, before- and after-address-translation packets need to be forwarded from the active NAT apparatus to the standby NAT apparatus. Thus, the band of the network managed by the operator could be tightened.

Therefore, the challenge is to supply a fixed global IP address(es) to a subscriber(s) without performing synchronization processing between (among) network address translation apparatuses having a redundant configuration. It is an object of the present invention to provide a gateway apparatus, a network address translation apparatus, a communication system, a communication method, and a program that resolve the challenge.

### SOLUTION TO PROBLEM

A gateway apparatus according to first aspect of the present invention includes: a selection part that selects one network address translation apparatus from a plurality of network address translation apparatuses redundantly storing a global IP address(es) allocated to a terminal(s) of a subscriber(s); and a forwarding part that forwards a packet(s) received from the terminal(s) to the selected network address translation apparatus.

A network address translation apparatus according to a second aspect of the present invention includes: a storing part that redundantly stores a global IP address(es) allocated to a terminal(s) of a subscriber(s) with a different network address translation apparatus(es); and a translation part that receives, from a gateway apparatus that forwards a packet(s) received from the terminal(s) to a network address translation apparatus selected from a plurality of network address translation apparatuses redundantly storing the global IP address(es), the packet(s) and converts an address(es) of the packet(s) by using the global IP address(es).

A communication system according to a third aspect of the present invention includes: a plurality of network address translation apparatuses redundantly storing a global IP address(es) allocated to a terminal(s) of a subscriber(s); and a gateway apparatus that forwards a packet(s) received from the terminal(s) to a network address translation apparatus selected from the plurality of network address translation apparatus(es).

A communication method according to a fourth aspect of the present invention includes steps of: causing a gateway apparatus to select one network address translation apparatus from a plurality of network address translation apparatuses redundantly storing a global IP address(es) allocated to a terminal(s) of a subscriber(s); and causing the gateway apparatus to forward a packet(s) received from the terminal(s) to the selected network address translation apparatus.

A communication method according to a fifth aspect of the present invention includes steps of: causing a network address translation apparatus to redundantly store a global IP address(es) allocated to a terminal(s) of a subscriber(s) with a different network address translation apparatus(es); causing the network address translation apparatus to receive, from a gateway apparatus that forwards a packet(s) received from the terminal(s) to a network address translation apparatus selected from a plurality of network address translation apparatuses redundantly storing the global IP address(es), the packet(s); and causing the network address translation apparatus to convert an address(es) of the packet(s) by using the global IP address(es).

A program according to a sixth aspect of the present invention causes a computer to perform processing for: selecting one network address translation apparatus from a plurality of network address translation apparatuses redundantly storing a global IP address(es) allocated to a terminal(s) of a subscriber(s); and forwarding a packet(s) received from the terminal(s) to the selected network address translation apparatus. The program may be provided as a program product stored in a non-transitory computer-readable storage medium.

### EFFECTS OF INVENTION

The gateway apparatus, the network address translation apparatus, the communication system, the communication method, and the program according to the present invention can supply a fixed global IP address(es) to a subscriber(s) without performing synchronization processing between (among) network address translation apparatuses having a redundant configuration.

### BRIEF DESCRIPTION OF THE DRAWINGS

Fig. 1 illustrates an example of a configuration of a communication system according to an exemplary embodiment.
Fig. 2 is a block diagram illustrating an example of a configuration of a gateway apparatus according the exemplary embodiment.
Fig. 3 is a block diagram illustrating an example of a configuration of a network address translation apparatus according to the exemplary embodiment.
Fig. 4 illustrates an example of a configuration of a communication system according to a first exemplary embodiment.
Fig. 5 is a block diagram illustrating an example of a configuration of the communication system according to the first exemplary embodiment.
Fig. 6 is a sequence diagram illustrating an example of a public IP pool information registration operation in the communication system according to the first exemplary embodiment.
Fig. 7 is a sequence diagram illustrating an example of a subscriber information registration operation in the communication system according to the first exemplary embodiment.
Fig. 8 is a sequence diagram illustrating an example of a packet exchange operation in the communication system according to the first exemplary embodiment.
Fig. 9 illustrates connection between an AGW and an individual CGNAT in the communication system according to the first exemplary embodiment.
Fig. 10 is a sequence diagram illustrating an example of an active /standby (ACT/SBY) system switching operation in the communication system according to the first exemplary embodiment.
Fig. 11 illustrates an example of a router advertisement operation by an individual CGNAT in the communication system according to the first exemplary embodiment.
Fig. 12 illustrates an example of redundant configuration (ACT/SBY configuration) formed by CGNATs according to a comparative example.
Fig. 13 illustrates an example of a redundant configuration (ACT/SBY configuration) formed by CGNATs when the communication system according to the first exemplary embodiment is applied.
Fig. 14 illustrates an example of a redundant configuration (ACT/SBY/SBY configuration) when the communication system according to the first exemplary embodiment is applied.
Fig. 15 is a block diagram illustrating an example of a configuration of an information processing apparatus.

### MODES

First, an outline of an exemplary embodiment will be described. The reference characters in the following outline are merely used as examples to facilitate understanding of the present invention. Therefore, the reference characters are not intended to limit the present invention to the illustrated modes. An individual connection line between blocks in an individual drawing signifies both one-way and two-way directions. An individual arrow schematically illustrates the principal flow of a signal (data) and does not exclude bidirectionality. In addition, while not clearly specified, an input port and an output port exist at an input end and an output end of an individual connection line in an individual circuit diagram, block diagram, internal configuration diagram, connection diagram, etc. indicated in the disclosure of the present application. The same holds true for an individual input-output interface.

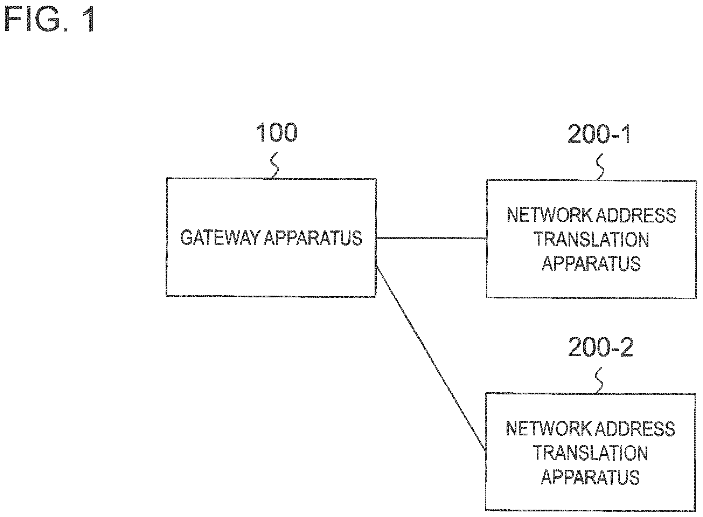

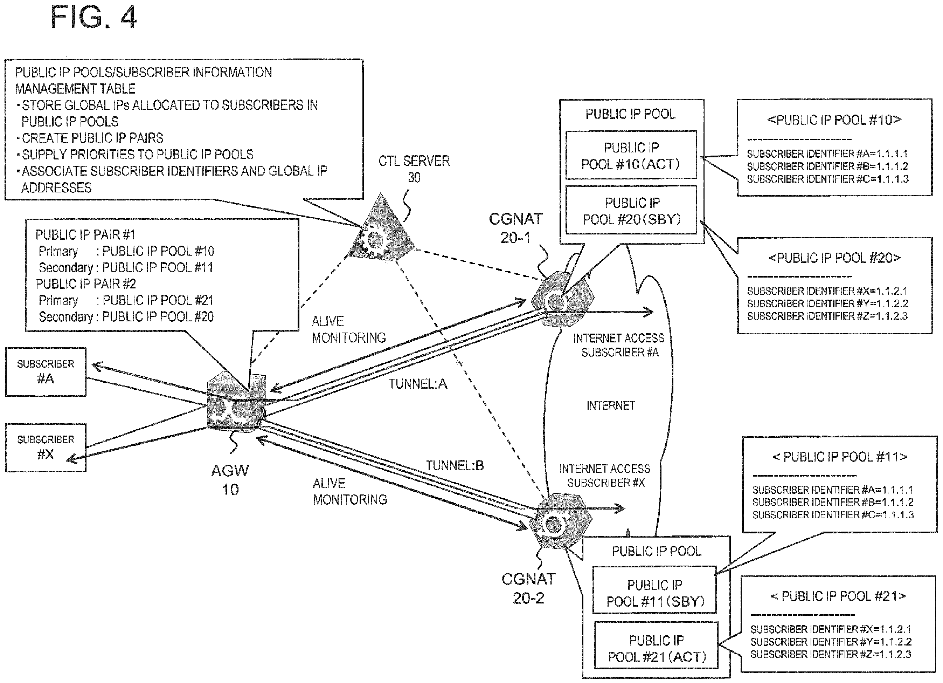

As illustrated in Fig. 1, a communication system according to an exemplary embodiment includes a plurality of network address translation apparatuses 200-1 and 200-2 (for example, carrier grade network address translators (CGNATs) 20-1 and 20-2 in Fig. 4) and a gateway apparatus 100 (for example, an access gateway (AGW) 10 in Fig. 4). The plurality of network address translation apparatuses 200-1 and 200-2 redundantly store a global IP (Internet protocol) address(es) allocated to a terminal(s) of a subscriber(s) (for example, subscriber #A in Fig. 4). The gateway apparatus 100 forwards a packet(s) received from the terminal(s) to a network address translation apparatus selected from the plurality of network address translation apparatuses 200-1 and 200-2.

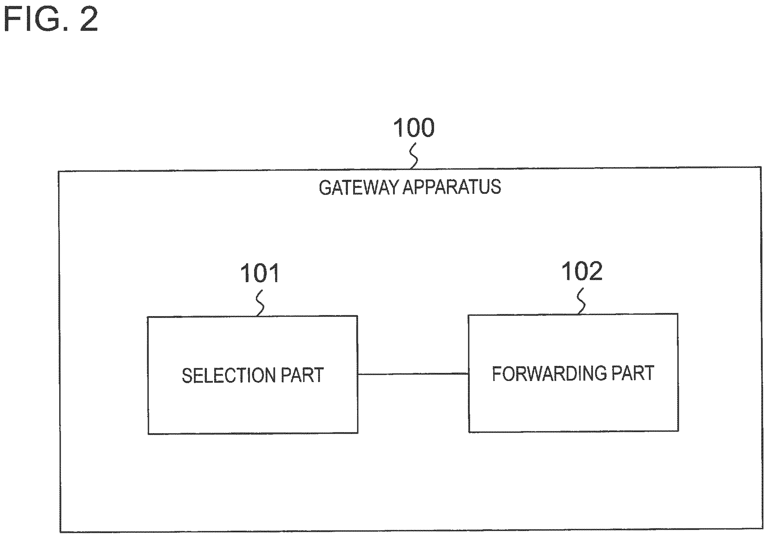

As illustrated in Fig. 2, the gateway apparatus 100 according to the exemplary embodiment includes a selection part 101 and a forwarding part 102. The selection part 101 selects one network address translation apparatus from a plurality of network address translation apparatuses (for example, the network address translation apparatuses 200-1 and 200-2 in Fig. 1) redundantly storing a global IP address(es) allocated to a terminal(s) of a subscriber(s). The forwarding part 102 forwards a packet(s) received from the terminal(s) to the selected network address translation apparatus.

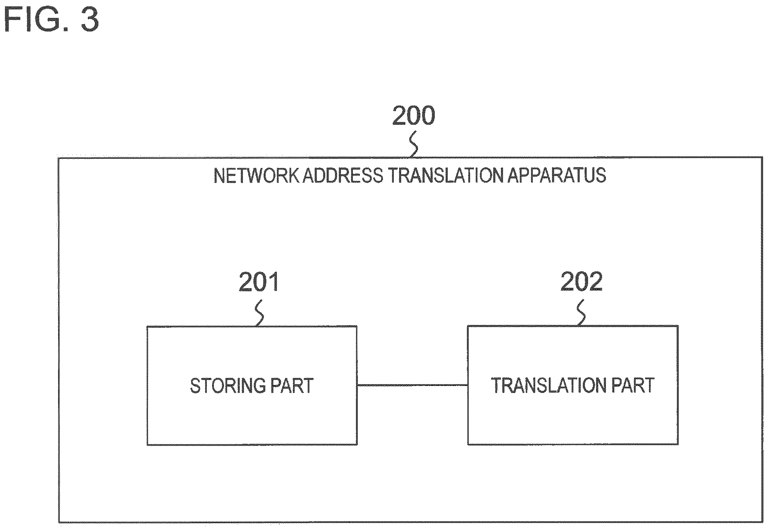

As illustrated in Fig. 3, an individual network address translation apparatus 200 according to the exemplary embodiment (for example, the network address translation apparatuses 200-1 and 200-2 in Fig. 1) includes a storing part 201 and a translation part 202. The storing part 201 redundantly stores a global IP address(es) allocated to a terminal(s) of a subscriber(s) with another network address translation apparatus. The translation part 202 receives, from a gateway apparatus (for example, the gateway apparatus 100 in Fig. 1) that forwards a packet(s) received from a terminal(s) to a network address translation apparatus selected from the plurality of network address translation apparatuses redundantly storing a global IP address(es), the packet(s) and translates an address(es) of the packet(s) by using the global IP address(es).

In the communication system, the gateway apparatus, and the network address translation apparatuses according to the exemplary embodiment, a global IP address(es) allocated to a terminal(s) of a subscriber(s) is redundantly held in a plurality of network address translation apparatuses. In addition, the gateway apparatus arranged between the plurality of network address translation apparatuses and the terminal(s) of the subscriber(s) forwards a packet(s) received from the terminal(s) to a network address translation apparatus selected from the plurality of network address translation apparatuses. Thus, with the communication system, the gateway apparatus, and the network address translation apparatuses according to the exemplary embodiment, a fixed global IP address(es) can be supplied to a subscriber(s) without performing synchronization processing between network address translation apparatuses having a redundant configuration.

Hereinafter, terms used in the disclosure of the present application will be described. A "global IP address" refers to an IP address allocated to a subscriber for Internet access. In addition, a global IP address is stored in a public IP pool included in a network address translation apparatus (for example, a CGNAT). A private IP address used in the residence of a subscriber is converted into a global IP address. In addition, a "public IP pool" is a pool for storing a group of global IP addresses (normally, IP prefixes) allocated to subscribers. In addition, a "public IP pair" is a pair of public IP pools storing the same IP prefix information.

Next, another configuration according to the exemplary embodiment will be described. In another configuration according to an exemplary embodiment, As illustrated in Fig. 4, pairs of public IP pools (for example, a pair of public IP pools #10 and #11 and a pair of public IP pools #20 and #21, etc.) are configured between the CGNATs (carrier grade network address translators) 20-1 and 20-2, and information about the pairs is set in the AGW (access gateway) 10. In this way, a public IP pool is selected by the AGW 10 arranged upstream of the CGNATs 20-1 and 20-2. In accordance with the priorities supplied to the public IP pools forming a pair, the AGW 10 may forward subscriber traffic to a public IP pool whose priority is relatively high (namely, the higher priority) in a normal operation.

In addition, it is preferable that the AGW 10 perform alive monitoring by using ping or the like to detect whether a failure has occurred in a CGNAT in which public IP pools are accommodated. When the AGW 10 detects that there is no response from a CGNAT, the AGW 10 changes the forwarding destination of the corresponding subscriber traffic to a public IP pool whose priority is relatively low (namely, the lower priority). A single ping destination may be set per CGNAT.

The public IP pools forming a pair (for example, the public IP pools #10 and #11 in Fig. 4) accommodate the same global IP addresses (IP prefixes) and supply one of the global IP addresses to a subscriber. The CGNATs 20-1 and 20-2 acquire information for associating the corresponding global IP addresses stored in the public IP pools with the corresponding subscribers on a one-on-one basis from a CTL server (control server) 30. In this way, the same global IP address can be allocated to a specified subscriber even before and after switching of the corresponding active and standby (ACT/SBY) public IP pools. The AGW 10 may select a public IP pair storing a global IP address used by a subscriber in accordance with an instruction from the CTL server 30.

When any one of the public IP pools (for example, the public IP pools #10, #11, #20, and #21 in Fig. 4) detects that a packet has been forwarded from the AGW 10, the public IP pool performs route advertisement of information about a corresponding stored global IP address on an upper router. In this way, even after the CGNAT storing the corresponding active (ACT) public IP pool is switched, the traffic to the global IP address allocated to the corresponding subscriber can be forwarded to a CGNAT storing a newly active (ACT) public IP pool. For example, in Fig. 4, when a failure occurs in the CGNAT 20-1, the public IP pool #11 is newly set to be active (ACT) in place of the public IP pool #10. Namely, the CGNAT storing the active (ACT) public IP pool is switched from the CGNAT 20-1 to the CGNAT 20-2. In this way, traffic from the Internet side addressed to the global IP address allocated to the corresponding subscriber can be forwarded to the CGNAT 20-2.

### <Exemplary Embodiment 1>

Next, a communication system according to a first exemplary embodiment will be described in detail with reference to drawings.

In the present exemplary embodiment, the following items (1) to (3) are realized in a CGNAT (carrier grade network address translator) redundant configuration scheme based on a fixed broadband service that supplies private IP (Internet Protocol) addresses to subscribers. The present exemplary embodiment assumes a service that supplies fixed global IP addresses to subscribers and assumes that the subscribers are associated with the global IP addresses on a one-on-one basis.
(1) A simple CGNAT redundant configuration (ACT/SBY (Active/Standby) configuration) in which the same global IP address can be taken over to a subscriber without performing synchronization processing between CGNATs is realized. However, the NAT session of the subscriber is not taken over.
(2) A redundant pair is configured between arbitrary CGNATs physically separated from each other, and a flexible network configuration can be established.
(3) A redundant configuration of three or more CGNATs, which is difficult to realize with an ACT/SBY configuration based on synchronization processing that fixedly associates a redundant node pair, is easily realized.

Fig. 4 illustrates an example of a configuration of a communication system according to the present exemplary embodiment. As illustrated in Fig. 4, the communication system includes the broadband access gateway (AGW) 10, the two CGNATs (carrier grade network address translators) 20-1 and 20-2, and the CTL (control) server 30.

The AGW 10 forwards traffic from subscribers (specifically, L2CPE (Layer 2 Customer Premises Equipment) of subscribers, for example) to the CGNATs 20-1 and 20-2. The CGNATs 20-1 and 20-2 supply global IP (Internet protocol) addresses for Internet access to the subscribers. The CTL server 30 sets necessary information in the AGW 10 and the CGNATs 20-1 and 20-2.

In the present exemplary embodiment, by causing the AGW 10 and the two CGNATs 20-1 and 20-2 to operate in cooperation based on the setting information from the CTL server 30, a redundant configuration (active/standby (ACT/SBY) configuration) of the CGNATs 20-1 and 20-2 is realized, and the same global IP address can be applied to a subscriber even after switching of the CGNATs. The timing at which the CTL server 30 performs the setting will be described below.

In addition, in the present exemplary embodiment, a redundant configuration (ACT/SBY configuration) is realized based on a simple system configuration, without causing the CGNATs 20-1 and 20-2 to perform synchronization processing. In addition, according to the present exemplary embodiment, a network for synchronization signals between the CGNATs can be removed. In this way, the system configuration can be simplified, and the constraints on the installation locations of the CGNATs can also be eliminated. Thus, a CGNAT redundant configuration can be realized by using public IP pools between arbitrary CGNATs in the system as a pair, and a highly reliable service can easily be realized. Hereinafter, configurations and operations according to the present exemplary embodiment will be described in detail.

### [Configuration]

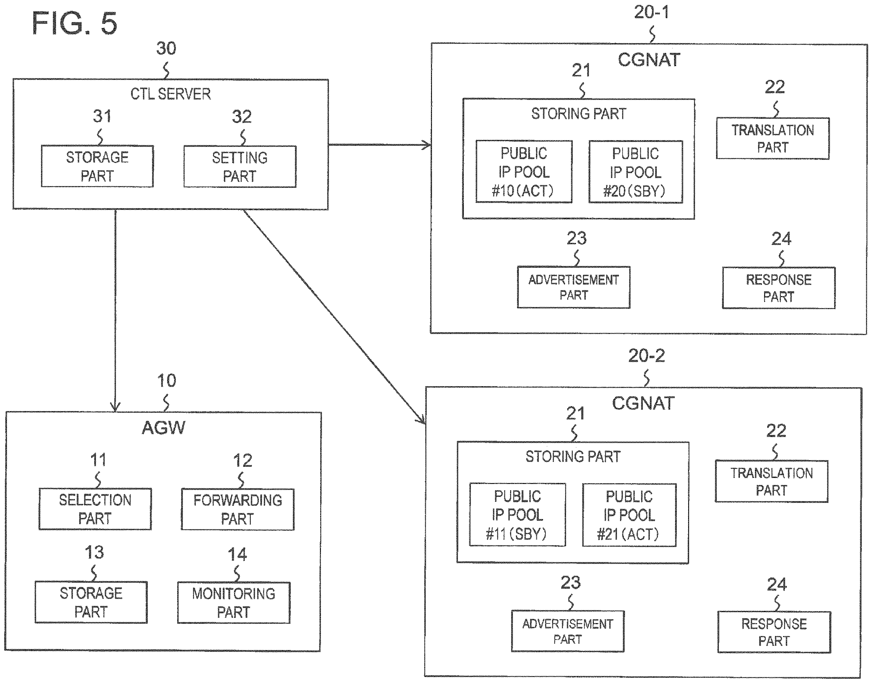

First, the CTL server 30, the AGW 10, and the CGNATs 20-1 and 20-2 included in the communication system according to the present exemplary embodiment will be described in detail. Fig. 5 is a block diagram illustrating an example of a configuration of the communication system according to the present exemplary embodiment.

As illustrated in Fig. 5, the CTL server 30 includes a storage part 31 and a setting part 32.

The storage part 31 stores two tables, which are a table (table 1) storing public IP pool information to be described below and a table (table 3) storing subscriber information. The setting part 32 refers to these tables held by the storage part 31 and sets necessary information in the AGW 10 and the CGNATs 20-1 and 20-2 to provide a service(s). The information set by the CTL server 30 will be described in detail in the following [Operations].

As illustrated in Fig. 5, the AGW 10 includes a selection part 11, a forwarding part 12, a storage part 13, and a monitoring part 14.

The storage part 13 stores subscriber identifiers, information (public IP pair information) that identifies the groups of public IP pools held by the CGNATs 20-1 and 20-2, and subscriber identification information in association with each other. The selection part 11 performs subscriber authentication when a subscriber first accesses the communication system according to the present exemplary embodiment. Next, the selection part 11 acquires public IP pair information that accommodates this subscriber.

The storage part 13 stores information indicating the priorities of the pools that store the global IP addresses in the CGNATs 20-1 and 20-2. The selection part 11 recognizes that priorities have been supplied and set by the CTL server 30 for two (or three or more) public IP pools forming a pair.

The monitoring part 14 performs alive monitoring on the public IP pools. The monitoring part 14 performs alive monitoring by using ping/BFD (Bidirectional Forwarding Detection), for example. The monitoring part 14 performs alive monitoring on alive monitoring IP addresses allocated to the CGNATs 20-1 and 20-2. The relationship between the alive monitoring IP addresses and the public IP pairs stored in the CGNATs 20-1 and 20-2 is set by the CTL server 30. The monitoring part 14 checks responses from the CGNATs 20-1 and 20-2. When there is a response from a CGNAT storing a public IP pool whose priority is relatively high (the higher priority), the selection part 11 continues to forward the corresponding traffic to this CGNAT. However, if there is no response from the CGNAT storing the public IP pool having the higher priority while there is a response from a CGNAT storing a public IP pool whose priority is relatively low (for example, the second highest priority), the selection part 11 forwards the traffic to the latter CGNAT. If there are responses from both of the public IP pools, the selection part 11 determines the public IP pool having the higher priority as being active (ACT) and forwards the traffic from the subscriber to the CGNAT storing this public IP pool.

The forwarding part 12 encapsulates subscriber traffic between the AGW 10 and the CGNATs 20-1 and 20-2 and forwards the encapsulated traffic. In this encapsulation, the forwarding part 12 supplies a subscriber identifier to the header of the individual packet. The forwarding part 12 may use GRE (Generic Routing Encapsulation) or the like, which is a general protocol, in the encapsulation processing. The forwarding part 12 sets a public IP pool address as the destination IP address in the GRE header and also sets a subscriber identifier. In addition, the paths between the AGW 10 and the CGNATs 20-1 and 20-2 (or the public IP pools held thereby) may be determined by a general routing protocol.

As illustrated in Fig. 5, the CGNATs 20-1 and 20-2 each includes a storing part 21, a translation part 22, and an advertisement part 23,

A response part 24 transmits a response in response to an alive monitoring request from the monitoring part 14 of the AGW 10. The alive monitoring may be started when a CGNAT is deployed in the system.

The storing part 21 stores public IP pools storing global IP addresses allocated to subscribers and performs redundancy management per public IP pool. By storing public IP pools storing the same global IP address in the two CGNATs 20-1 and 20-2, the same global IP address can be supplied to the corresponding subscriber even after switching of the CGNATs.

The AGW 10 is connected to the CGNATs 20-1 and 20-2 via tunnels per subscriber by using GRE (Generic Routing Encapsulation)/DS-Lite (Dual-Stack Lite) or the like, and an individual subscriber is identified by a subscriber identifier in a header. The AGW 10 supplies a subscriber identifier unique to an individual subscriber.

The translation part 22 identifies a subscriber based on the corresponding subscriber identifier and determines a global IP address to be supplied to this subscriber. The AGW 10 can identify a subscriber by using, for example, a subscriber-specific QinQ (IEEE802.1Q Tunneling) frame (S-tag (Service tag)/C-tag (Customer-tag) of VLAN) supplied in an access network.

The storing part 21 uniquely associates a subscriber identifier with a global IP address in a public IP pool. The CTL server 30 sets information for this association in the CGNATs 20-1 and 20-2.

In addition, the configuration of redundant pairs of public IP pools is managed by the AGW 10, not by the CGNATs 20-1 and 20-2.

The advertisement part 23 performs router advertisement of a global IP address held in an ACT public IP pool on an upper router. In this way, the traffic from the Internet side can be forwarded to the global IP address accommodated in the ACT public IP pool.

When the advertisement part 23 detects traffic from the AGW 10 to the Internet direction, the advertisement part 23 recognizes a public IP pool accommodating the subscriber that has transmitted this traffic as being active (ACT). After recognizing this public IP pool as being active (ACT), the advertisement part 23 performs router advertisement of global IP address information allocated to the subscriber on an upper router. When switching of ACT/SBY CGNATs has occurred, the advertisement part 23 of the CGNAT having a newly active (ACT) public IP pool performs the same processing. Consequently, the upper router switches the path to the CGNAT based on the router advertisement.

### [Operations]

Next, operations of the communication system according to the present exemplary embodiment will be described.

As will be described in detail below, a service(s) is provided by setting ACT/SBY public IP pools in the CGNATs 20-1 and 20-2 and causing the AGW 10 to select a public IP pool used by an individual subscriber. Hereinafter, (1) "Setting of Management Information by CTL Server 30", (2) "Packet Forwarding Sequence", and (3) "System Switching Sequence" will be described sequentially.

### (1) "Setting of Management Information by CTL Server 30"

An operator of the system sets a "public IP pool information" table set in the AGW 10 and the CGNATs 20-1 and 20-2 and a "subscriber information" table set in the AGW 10 and the CGNATs 20-1 and 20-2 when a subscriber(s) is registered in the system in the CTL server 30.

The CTL server 30 manages public IP pools for supplying global IPs to subscribers. The CTL server 30 configures two public IP pools storing the same global IP(s) as a pair and supplies a priority to an individual public IP pool. For example, the CTL server 30 supplies priority 100 to one public IP pool and priority 200 to the other public IP pool. In this case, as an example, the smaller priority value indicates the higher priority.

By setting the public IP pools each having a priority in the AGW 10, the AGW 10 can determine a packet forwarding direction in accordance with a priority. In addition, by previously setting a plurality of public IP pairs in the AGW 10 and setting public IP pairs used by subscribers, load balancing on the CGNATs 20-1 and 20-2 can be achieved.

Table 1 illustrates an example of a configuration of the table ("public IP pool information" table) storing public IP pool information held by the storage part 31 of the CTL server 30.

**Table 1: "Public IP pool information" table**

| **Public IP pairs** | **Priorities** | **Public IP pool IP addresses** | **Public IP pool IPs** | **CGNAT IP addresses** |
|---|---|---|---|---|
| Public IP pair #1 | 100 | Tunnel IP #10 | Public IP pool #10 | 1.1.201.1 |
| | 200 | Tunnel IP # 11 | Public IP pool # 11 | 1.1.202.1 |
| Public IP pair # 2 | 200 | Tunnel IP #20 | Public IP pool # 20 | 1.1.201.1 |
| | 100 | Tunnel IP #21 | Public IP pool # 21 | 1.1.202.1 |

In addition, table 2 illustrates the contents of parameters managed by the "public IP pool information" table illustrated in table 1.

**Table 2: Parameters of "public IP pool information"**

| **Parameters** | **Contents** | **Notes** |
|---|---|---|
| Public IP pair | Specify name of public IP pair used by subscriber | |
| Priority | Priority of public IP pool | AGW 10 selects public IP pool whose priority is relatively high. |
| Public IP pool IP address | IP address of public IP pool | |
| Global IP | Global IP address group that public IP pool supplies to subscribers | Public IP pools forming a pair store the same global IP |
| CGNAT IP address | IP address of CGNAT storing public IP pool | Destination IP address for alive monitoring |

When a subscriber is registered in the system, the CTL server 30 generates a table ("subscriber information" table) storing "subscriber information" as illustrated in table 3 and stores the table in the storage part 31.

**Table 3: "Subscriber information" table**

| **Subscribers** | **Public IP pairs** | **Subscriber identifiers** | **Global IP addresses** |
|---|---|---|---|
| #A | Public IP pair #1 | Tunnel ID_A | 1.1.1.1 |
| #B | Public IP pair #1 | Tunnel ID_B | 1.1.1.2 |
| #C | Public IP pair #1 | Tunnel ID_ C | 1.1.1.3 |
| #X | Public IP pair #2 | Tunnel ID_X | 1.1.2.1 |
| #Y | Public IP pair #2 | Tunnel ID_ Y | 1.1.2.2 |
| #Z | Public TP pair #2 | Tunnel ID_Z | 1.1.2.3 |

Table 4 illustrates the contents of parameters managed in the "subscriber information" table illustrated in table 3.

**Table 4: Subscriber information parameters**

| **Parameters** | **Contents** | **Notes** |
|---|---|---|
| Subscriber identifier | Subscriber identification number | Stored in encapsulated header |
| Public IP pool | CGNAT function number | |
| Global IP address | Global IP address group that public IP pool supplies to subscribers | |

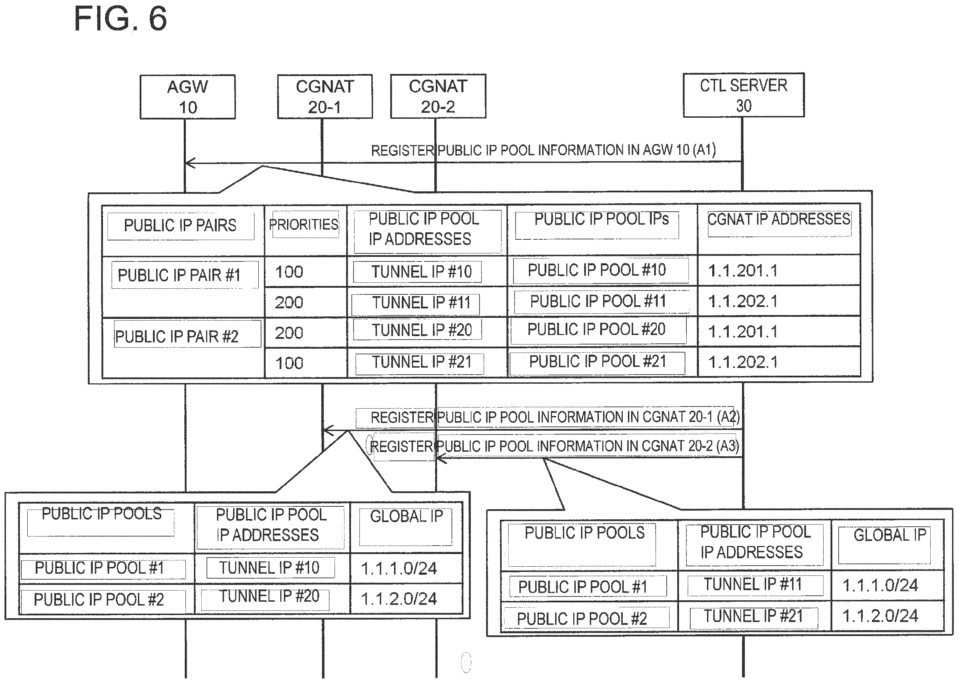

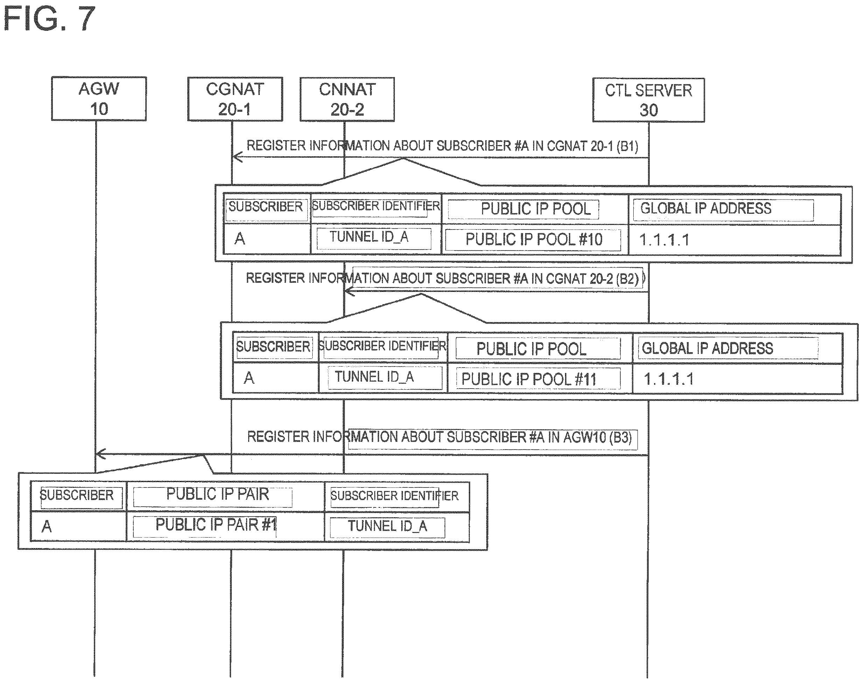

The parameters managed in tables 1 and 2 are set in the AGW 10 and the CGNATs 20-1 and 20-2 in accordance with the following sequences in Figs. 6 and 7. Consequently, a service(s) is provided.

Fig. 6 is a sequence diagram illustrating an example of an operation in which the setting part 32 of the CTL server 30 registers information included in the "public IP pool information" table stored in the storage part 31 in the AGW 10 and the CGNATs 20-1 and 20-2. Table 5 illustrates the parameters set by the setting part 32 of the CTL server 30 in the individual steps in the sequence diagram in Fig. 6.

**Table 5: "Public IP pool information" setting sequence**

| **Steps** | **Contents** | **Directions** |
|---|---|---|
| A1 | The following information included in "public IP pool information" table is set in AGW 10. | CTL server 30=>AGW 10 |
| | · Public IP pairs | |
| | · Priorities | |
| | · Public IP pool IP addresses | |
| | · Public IP pool IPs | |
| | · CGNAT IP addresses | |
| A2 | The following information included in public IP pool information" table in CGNAT 20-1. | CTL server 30=>CGNAT 20-1 |
| | · Public IP pools | |
| | · Public IP pool IP addresses | |
| | · Global IPs | |
| A3 | The following information included in "public IP pool information" table in CGNAT 20-2. | CTL server 30=>CGNAT 20-2 |
| | · Public IP pools | |
| | · Public IP pool IP addresses | |
| | · Global IPs | |

The monitoring part 14 of the AGW 10 transmits alive monitoring packets to the CGNAT IP addresses specified by the CTL server 30. The present exemplary embodiment assumes that the monitoring part 14 starts the alive monitoring after the CGNATs 20-1 and 20-2 are incorporated into the communication system. If the monitoring part 14 receives no response to the alive monitoring, the monitoring part 14 switches the corresponding public IP pools. In addition, since a CGNAT IP address is set per CGNAT, by combining CGNAT IP address information and public IP pool information, the AGW 10 can manage the public IP pool information stored in the CGNATs 20-1 and 20-2.

In addition, by setting pairs of public IP pools each having a priority and the destination IP address of an individual one of the public IP pools in the AGW 10, information about the CGNATs 20-1 and 20-2 as the forwarding destinations can be managed by the AGW 10.

In addition, by setting public IP pools storing the same global IP(s) and the IP addresses for forwarding traffic to the public IP pools in the CGNATs 20-1 and 20-2, the CGNATs 20-1 and 20-2 can manage information about their own public IP pools.

Fig. 7 is a sequence diagram illustrating an example of an operation in which the setting part 32 of the CTL server 30 sets information about a subscriber in the AGW 10 and the CGNATs 20-1 and 20-2 when the subscriber is registered in the communication system. In addition, table 6 illustrates examples of the parameters set by the setting part 32 of the CTL server 30 in the individual steps in the sequence diagram illustrated in Fig. 7.

**Table 6: "Subscriber information" setting sequence**

| **Steps** | **Contents** | **Directions** |
|---|---|---|
| B1 | The following subscriber information is set in storing part 21 of CGNAT 20-1. | CTL server 30=>CGNAT 20-1 |
| | · Subscriber identifier | |
| | · Public IP pool | |
| | · Global IP address | |
| B2 | The following subscriber information is set in storing part 21 of CGNAT 20-2. | CTL server 30=>CGNAT 20-2 |
| | · Subscriber identifier | |
| | · Public IP pool | |
| | · Global IP address | |
| B3 | The following subscriber information is set in storage part 13 of AGW 10. | CTL server 30=>AGW 10 |
| | · Public IP pair | |
| | · Subscriber identifier | |

By setting a subscriber (a subscriber identifier) and a global IP address allocated to the subscriber in each of the storing parts 21 of the CGNATs 20-1 and 20-2, each of the translation parts 22 of the CGNATs 20-1 and 20-2 can determine the global IP address allocated to the corresponding traffic forwarded from the AGW 10. In steps B1 and B2 in the sequence diagram in Fig. 7, as an example, a global IP address 1.1.1.1 is allocated to subscriber #A.

The selection part 11 of the AGW 10 refers to the storage part 13, obtains a public IP pair to be applied to the subscriber (subscriber identifier), and determines a forwarding destination public IP pool. In step B3 in the sequence diagram in Fig. 7, a public IP pair #1 (table 1) formed by the public IP pools #10 and #11 is allocated to subscriber #A. At this point, the selection part 11 determines that the traffic from subscriber #A is forwarded to the public IP pool #10 or #11.

Upon completion of the sequence in Fig. 7, the preparation of the communication that the subscriber #A performs by using the communication system according to the present exemplary embodiment is completed.

### (2) "Packet Forwarding Sequence"

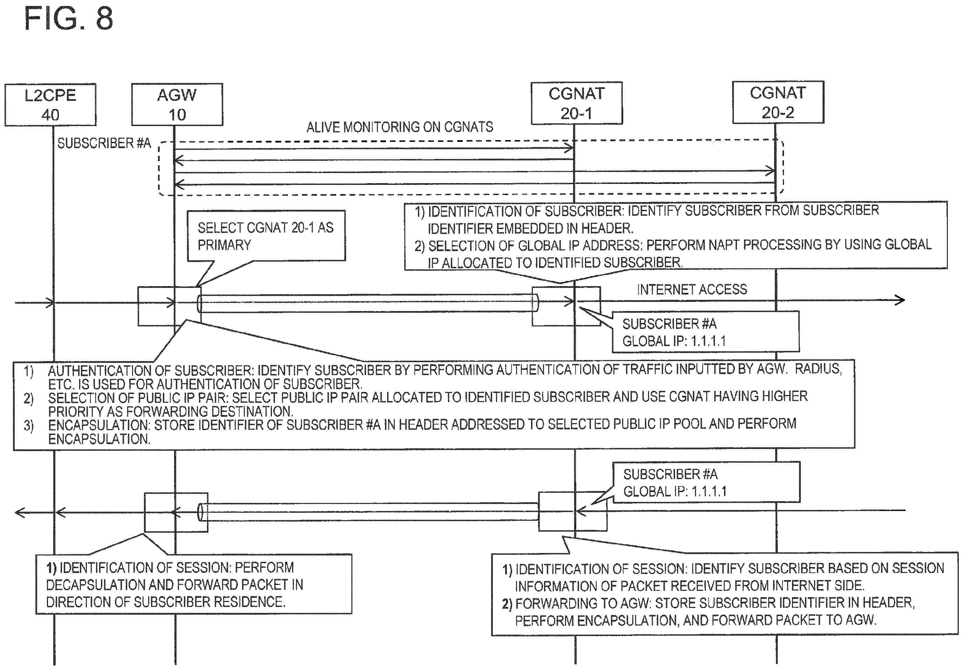

Fig. 8 is a sequence diagram illustrating an example of an operation in which the subscriber performs packet forwarding via the AGW 10 and the CGNAT 20-1.

First, packet forwarding from the AGW 10 to the CGNAT 20-1 will be described. As illustrated in Fig. 8, when the AGW 10 detects traffic from L2CPE (Layer 2 Customer Premises Equipment) 40 of subscriber #A, the selection part 11 of the AGW 10 refers to the storage part 13 and determines the public IP pair #1 allocated to subscriber #A.

The monitoring part 14 of the AGW 10 monitors whether the CGNATs 20-1 and 20-2 storing the public IP pools #10 and #11 included in the public IP pair #1 allocated to subscriber #A are alive. The selection part 11 selects a public IP pool having the higher priority, based on the alive monitoring results. This example assumes that no failure has occurred in any of the CGNATs 20-1 and 20-2 storing the respective public IP pools #10 and #11 included in the public IP pair #1. In this case, the selection part 11 selects the CGNAT 20-1 storing the public IP pool #10 whose priority is relatively high. By using the destination IP address (tunnel IP #10) and the subscriber identifier (tunnel ID_A), the forwarding part 12 encapsulates the traffic from subscriber #A and forwards the encapsulated traffic to the selected CGNAT 20-1.

The translation part 22 of the CGNAT 20-1 determines the corresponding to the public IP pool (public IP pool #10) from the destination IP address (tunnel IP #10) in the header information of the encapsulated packet. In addition, the translation part 22 determines the subscriber (#A) and the global IP address (1.1.1.1) allocated to this subscriber (#A) from the subscriber identifier (tunnel ID A) in the header information, performs NAPT (Network Address Port Translation) processing, and forwards the traffic in the Internet direction.

Next, packet forwarding from the CGNAT 20-1 to the AGW 10 will be described with reference to Fig. 8. The translation part 22 of the CGNAT 20-1 identifies the subscriber (#A) from the destination IP address in a packet received from the Internet side. By using the destination IP address of the AGW 10 and the subscriber identifier (tunnel ID_A), the translation part 22 encapsulates the packet on which NAPT processing has been processed, and forwards the packet to the AGW 10.

The forwarding part 12 of the AGW 10 determines the subscriber (#A) by using the subscriber identifier (tunnel ID_A) and forwards the packet to the access network side.

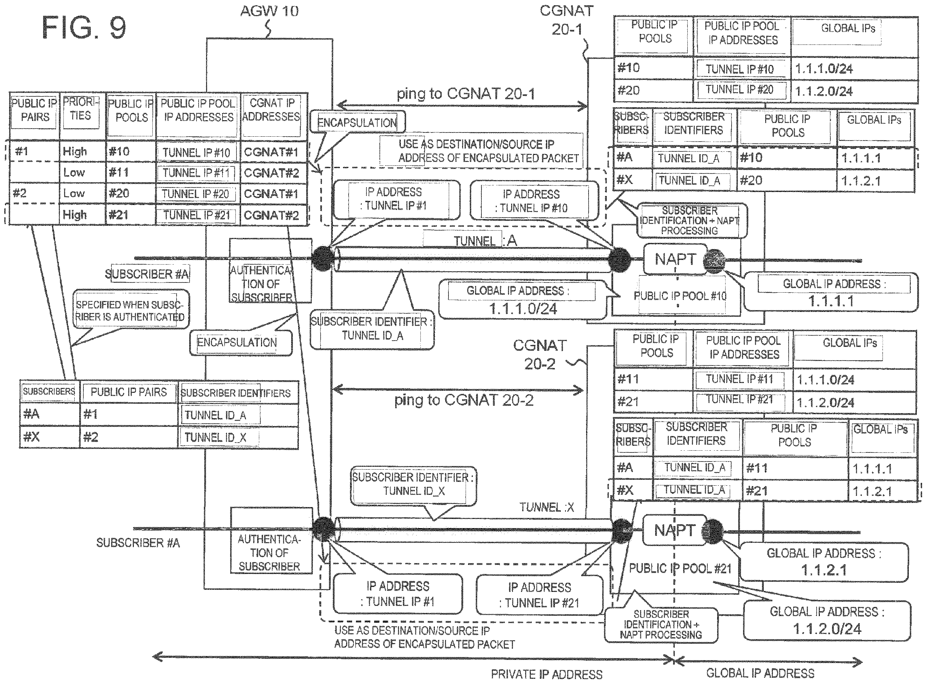

Fig. 9 illustrates an example of tunnel connection between the AGW 10 and the CGNATs 20-1 and 20-2. Hereinafter, operations of the AGW 10 and the CGNATs 20-1 and 20-2 illustrated in Fig. 9 will be described.

The selection part 11 of the AGW 10 includes a subscriber authentication section per subscriber. The selection part 11 uses a subscriber authentication section for authentication and identification of a subscriber and selects a public IP pair connected to the subscriber. As illustrated in Fig. 9, the selection part 11 selects the public IP pair #1 for subscriber #A. Likewise, the selection part 11 selects the public IP pair #2 for subscriber #X.

Next, the selection part 11 selects a public IP pool having the higher one of the priorities between the public IP pools forming an individual public IP pair. As illustrated in Fig. 9, the selection part 11 selects the public IP pool #10 having the higher priority between the public IP pools #10 and #11 included in the public IP pair #1 for subscriber #A. Likewise, the selection part 11 selects the public IP pool #21 having the higher priority between the public IP pools #20 and #21 included in the public IP pair #2 for subscriber #X.

The forwarding part 12 of the AGW 10 encapsulates the subscriber traffic by using the IP addresses allocated to the respective public IP pools selected by the selection part 11 and forwards the encapsulated traffic. The destination addresses of the public IP pools are specified by the CTL server 30. As illustrated in Fig. 9, the forwarding part 12 encapsulates the traffic from subscriber #A by using the IP address (tunnel IP #10) allocated to the public IP pool #10, supplies a subscriber identifier (tunnel ID_A) to the tunnel header used for the encapsulation, and forwards the traffic to the CGNAT 20-1. Likewise, the forwarding part 12 encapsulates the traffic from subscriber #X by using the IP address (tunnel IP #21) allocated to the public IP pool #21, supplies a subscriber identifier (tunnel ID_X) to the tunnel header used for the encapsulation, and forwards the traffic to the CGNAT 20-2. In this way, by supplying a subscriber identifier to the tunnel header used for the encapsulation, a tunnel can be generated per subscriber.

The CGNATs 20-1 and 20-2 select public IP pools based on the destination IP addresses in the tunnel headers and forward the packets to the public IP pools accommodated in the storing parts 21 of the CGNATs 20-1 and 20-2. As illustrated in Fig. 9, the CGNAT 20-1 selects the public IP pool (#10) based on the destination IP address (tunnel IP #10) in the tunnel header of a packet from subscriber #A, and forwards the packet to the accommodated public IP pool #10 accommodated in the storing part 21 of the CGNAT 20-1. Likewise, the CGNAT 20-2 selects the public IP pool (#21) based on the destination IP address (tunnel IP #21) in the tunnel header of a packet from subscriber #X and forwards the packet to the public IP pool #21 accommodated in the storing part 21 of the CGNAT 20-2.

A public IP pool identifies a subscriber based on a subscriber identifier supplied in a tunnel header and forwards the packet to a NAPT section ensured in the translation part 22 per subscriber. The NAPT section performs NAPT processing by using a global IP address allocated to a subscriber on a one-on-one basis. As illustrated in Fig. 9, the public IP pool #10 accommodated in the storing part 21 identifies the subscriber (#A) based on the subscriber identifier (tunnel ID_A) supplied in the tunnel header of a packet from subscriber #A and forwards the packet to the NAPT section ensured for subscriber #A in the translation part 22. The NAPT section performs NAPT processing by using a global IP address (1.1.1.1) allocated to subscriber #A on a one-on-one basis. Likewise, the public IP pool #21 accommodated in the storing part 21 identifies the subscriber (#X) based on the subscriber identifier (tunnel ID_X) allocated to the tunnel header of the packet from subscriber #X and forwards the packet to the NAPT section ensured for the subscriber #X in the translation part 22. The NAPT section performs NAPT processing by using a global IP address (1.1.2.1) allocated to subscriber #X on a one-on-one basis.

### (3) "System Switching Sequence"

Next, an operation in which, when a failure occurs in a CGNAT storing an active (ACT) (a relatively high priority) public IP pool, a CGNAT storing a standby (SBY) (a relatively low priority) public IP pool switches to serve as an active public IP pool will be described.

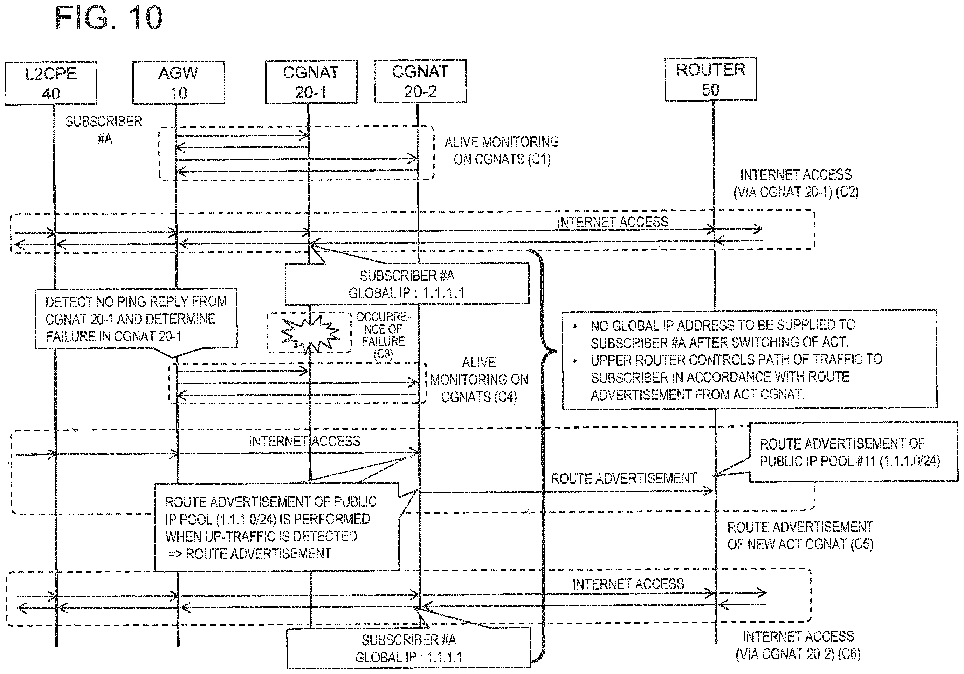

Fig. 10 is a sequence diagram illustrating an example of an operation in which, when a failure occurs in the CGNAT 20-1 storing the ACT public IP pool #10 included in the public IP pair #1 allocated to subscriber #A, the CGNAT 20-2 storing the SBY public IP pool #11 switches to serve as an active public IP pool. Table 7 illustrates the contents of steps C1 to C6 in the sequence diagram in Fig. 10.

**Table 7: subscriber information setting sequence**

| **Steps** | **Contents** |
|---|---|
| C1 | Monitoring part 14 of AGW 10 performs alive monitoring on CGNATs 20-1 and 20-2 storing public IP pools #10 and #11, respectively, included in public IP pair #1 allocated to subscriber #A. If there are responses from both CGNATs 20-1 and 20-2, monitoring part 14 recognizes normal operation state. In this case, selection part 11 selects CGNAT 20-1 storing public IP pool #10 having higher priority. |
| C2 | Forwarding part 12 of AGW 10 forwards traffic from subscriber #A to public IP pool #10 (held in CGNAT 20-1) having high priority. |
| C3 | Failure occurs in CGNAT 20-1 storing public IP pool #10. |
| C4 | Monitoring part 14 of AGW 10 recognizes that there is no response from CGNAT 20-1 while there is response from CGNAT 20-2. Selection part 11 selects CGNAT 20-2 storing public IP pool #11 having lower priority. |
| C5 | Forwarding part 12 of AGW 10 recognizes SBY CGNAT (CGNAT 20-2) as new ACT and forwards traffic from subscriber #A. When recognizing input of traffic, advertisement part 23 of CGNAT 20-2 performs router advertisement of global IP address information stored in public IP pool #11 on upper router 50. |
| C6 | Forwarding part 12 of AGW 10 forwards traffic from subscriber #A to new ACT public IP pool #11 (held in CGNAT 20-2) having lower priority. After path information of traffic from Internet to subscriber #A is changed on Internet side, traffic is forwarded to CGNAT 20-2 storing new ACT public IP pool #11. |

In this way, the monitoring part 14 of the AGW 10 regularly (for example, periodically) performs alive monitoring on the registered CGNATs 20-1 and 20-2. If the selection part 11 cannot receives an alive monitoring response from a CGNAT, the selection part 11 checks a list of public IP pools accommodated in this CGNAT. If there is a public IP pool currently used as an ACT public IP pool, the selection part 11 uses a standby (SBY) public IP pool that forms a pair with this public IP pool as a new ACT public IP pool.

Consequently, the forwarding part 12 of the AGW 10 can forward the traffic from the subscriber to the new ACT public IP pool.

In addition, the translation part 22 of the CGNAT identifies the subscriber based on the header information of the forwarded and encapsulated subscriber traffic, determines a global IP address allocated to this subscriber, and performs NAPT (Network Address Port Translation) processing. The same global IP address allocated to the subscriber is set in both of the public IP pools forming the pair by the CTL server 30. Thus, if the AGW 10 supplies the same subscriber identifier to a packet header, the same global IP address can be supplied to the subscriber before and after switching of the public IP pools. In this way, the corresponding traffic from the AGW 10 to the CGNAT 20-1 or 20-2 can properly be forwarded in the Internet direction.

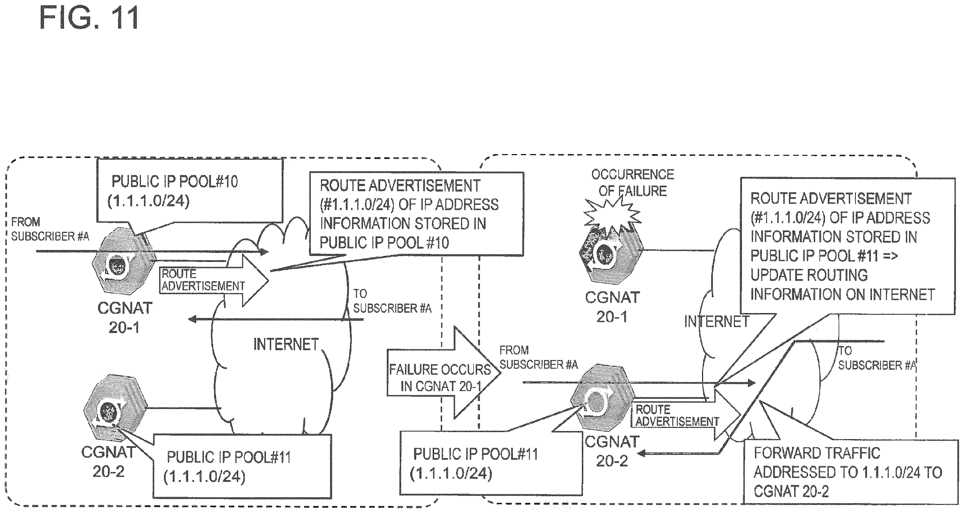

In addition, regarding the corresponding traffic from the Internet to the CGNATs 20-1 and 20-2, a router 50 arranged on a network needs to forward the traffic to a CGNAT storing the newly ACT public IP pool (operating). Thus, along with the switching of the CGNAT storing the ACT public IP pool, the traffic forwarding direction needs to be changed. Fig. 11 illustrates an example of an operation of changing the packet forwarding route from the Internet when a CGNAT storing a SBY public IP pool has been switched to a CGNAT storing an ACT public IP pool.

A public IP pool that has received traffic from a subscriber recognizes that the public IP pool has been selected as an active (ACT) public IP pool. Next, the advertisement part 23 performs router advertisement of a corresponding global IP address accommodated in this public IP pool on the upper router 50. The upper router 50 reviews the path information and switches the direction of the traffic that flows from the Internet to the subscriber via the CGNAT so that the traffic will flow via the CGNAT storing the newly ACT public IP pool.

The left side in Fig. 11 illustrates a state before a failure occurs in the CGNAT 20-1. The public IP pool #10 accommodated in the CGNAT 20-1 recognizes that it is an active (ACT) public IP pool for subscriber #A. In this state, the advertisement part 23 performs router advertisement of the global IP address (1.1.1.0/24) held in the public IP pool #10 on the Internet side via the upper router 50 connected to the CGNAT 20-1. The router on the Internet side sets a routing table and recognizes that the forwarding destination of packets addressed to the IP address 1.1.1.0/24 is the CGNAT 20-1.

In contrast, the right side in Fig. 11 illustrates a state after a failure has occurred in the CGNAT 20-1. When the CGNAT storing the active (ACT) public IP pool for subscriber #A needs to be switched, the public IP pool #11 accommodated in the CGNAT 20-2 recognizes that it is an active (ACT) public IP pool for subscriber #A. In this state, the advertisement part 23 performs router advertisement of the global IP address (1.1.1.0/24) stored in the public IP pool #11 on the Internet side via the upper router 50 connected to the CGNAT 20-2. An individual router on the Internet side that has received the new router advertisement updates its own routing table and recognizes that the forwarding destination of the packets addressed to the IP address1.1.1.0/24 is the CGNAT 20-2.

### [Advantageous Effect]

Next, advantageous effects provided by the communication system according to the present exemplary embodiment will be described.

### (1) Simplification of Redundant Configuration

In the communication system according to the present exemplary embodiment, synchronization interfaces between CGNATs forming a pair can be removed. Thus, it is possible to simplify the system configuration and supply the same global IP address to a subscriber even before and after switching the systems. In addition, according to this communication system, CGNATs do not need to exchange synchronization data via synchronization interfaces, and the consumption amount of the band of the operator network can be reduced.

### (2) Improved Freedom in Pool Configuration

In addition, in the communication system according to the present exemplary embodiment, for a plurality of CGNATs, the operator can dynamically set a pair of public IP pools based on resources (for example, the band of the network connecting CGNATs, the number of subscribers accommodated per CGNAT, etc.). Namely, the operator can arbitrarily establish a pair of public IP pools in CGNATs after CGNAT facilities are installed.

In addition, in the communication system according to the present exemplary embodiment, when a pair of public IP pools is configured, there is no need to take geographical conditions or synchronous network settings into consideration. Thus, it is possible to set public IP pools in consideration of free resources of an individual CGNAT and arbitrarily perform network design of the ACT/SBY configuration. Hereinafter, advantageous effects according to the present exemplary embodiment will be described with reference to a comparative example.

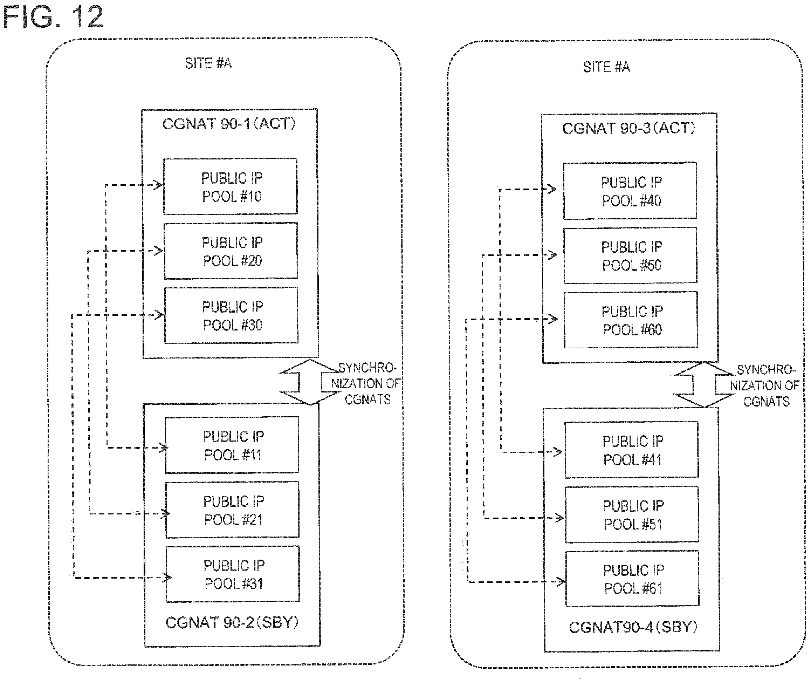

Fig. 12 illustrates an example of a redundant (ACT/SBY) configuration of CGNATs according to a comparative example. In this comparative example, as illustrated in Fig. 12, it is necessary to previously determine redundancy pairs (a pair of CGNATs 90-1 and 90-2 and a pair of CGNATs 90-3 and 90-4) and establish a network for exchanging synchronization information between CGNATs. In addition, when a redundant configuration is realized between the CGNAT 90-1 arranged at a site #A and the CGNAT 90-3 or 90-4 arranged at a site #B, a synchronous network that extends between the sites #A and #B is necessary. Thus, there could be cases in which a redundant configuration cannot be set due to problems such as the distance, the band, or the like between the sites #A and #B.

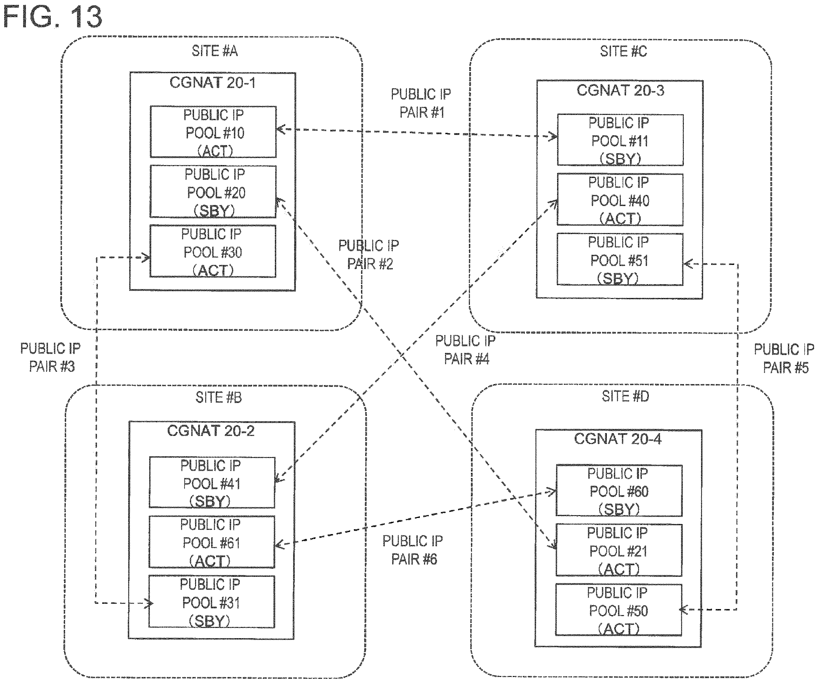

In contrast, Fig. 13 illustrates an example of a redundant configuration of CGNATs when the communication system according to the present exemplary embodiment is applied. In this case, as illustrated in Fig. 13, a pair of public IP pools can be configured by freely combining CGNATs arranged at sites. In addition, when a pair is configured, since no synchronization network between CGNATs needs to be established, there are no constraints in combining public IP pools as a pair. Thus, a pair can be reconfigured at arbitrary timing based on resource statuses of CGNATs. Table 8 illustrates combinations of public IP pools stored in four CGNATs 20-1 to 20-4 arranged at four sites #A to #D as illustrated in Fig. 13.

**Table 8: Examples of ACT/SBY Configuration**

| **Public IP pairs** | **Priorities** | **Public IP pool IP addresses** | **Global IPs** | **CG NAT numbers** | **Statuses** | **Sites** |
|---|---|---|---|---|---|---|
| Public IP pair #1 | 100 | Tunnel IP #10 | 1.1.1.0/24 | 1 | ACT | A |
| | 200 | Tunnel IP #11 | 1.1.1.0/24 | 3 | SBY | C |
| Public IP pair # 2 | 200 | Tunnel IP #20 | 1.1.2.0/24 | 1 | SBY | A |
| | 100 | Tunnel IP #21 | 1.1.2.0/24 | 4 | ACT | D |
| Public IP pair #3 | 100 | Tunnel IP #30 | 1.1.3.0/24 | 1 | ACT | A |
| | 200 | Tunnel IP #31 | 1.1.3.0/24 | 2 | SBY | B |
| Public IP pair #4 | 100 | Tunnel IP #40 | 1.1.4.0/24 | 3 | ACT | C |
| | 200 | Tunnel IP #41 | 1.1.4.0/24 | 2 | SBY | B |
| Public IP pair #5 | 100 | Tunnel IP #50 | 1.1.5.0/24 | 4 | ACT | D |
| | 200 | Tunnel IP #51 | 1.1.5.0/24 | 3 | SBY | C |
| Public IP pair #6 | 200 | Tunnel IP #60 | 1.1.6.0/24 | 4 | SBY | D |
| | 100 | Tunnel IP #61 | 1.1.6.0/24 | 2 | ACT | B |

### (3) Realization of ACT/SBY/SBY Configuration

In the communication system according to the present exemplary embodiment, a redundancy function (for example, ACT/SBY/SBY) formed by three or more CGNATs can easily be realized by setting information about three or more public IP pools having priorities in the AGW 10 and applying the technique described in the present exemplary embodiment.

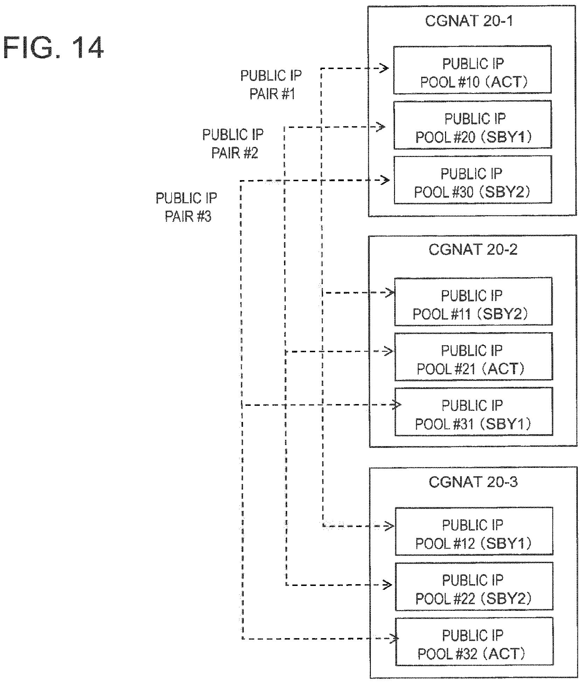

In the ACT/SBY/SBY configuration, since two standby (SBY) CGNATs are arranged, even if a failure occurs in one of the CGNATs, an ACT/SBY operation can be maintained. Thus, even when a failure occurs, no urgent maintenance is necessary. As a result, an abnormal apparatus (for example, a CGNAT) can be replaced within business hours, and the cost of the maintenance operation can be reduced. Fig. 14 and table 9 illustrate examples of an ACT/SBY/SBY configuration when the communication system according to the present exemplary embodiment is used.

**Table 9: Examples of ACT/SBY/SBY Configuration**

| **Public IP pairs** | **Priorities** | **Public IP pool IP addresses** | **Global IPs** | **CGNAT numbers** | **Statuses** | **Sites** |
|---|---|---|---|---|---|---|
| Public IP pair #1 | 100 | Tunnel IP #10 | 1.1.1.0/24 | 1 | ACT | A |
| | 300 | Tunnel IP # 11 | 1.1.1.0/24 | 2 | SBY2 | B |
| | 200 | Tunnel IP #12 | 1.1.1.0/24 | 3 | SBY1 | C |
| Public IP pair #2 | 200 | Tunnel IP #20 | 1.1.2.0/24 | 1 | SBY1 | A |
| | 100 | Tunnel IP #21 | 1.1.2.0/24 | 2 | ACT | B |
| | 300 | Tunnel IP #22 | 1.1.2.0/24 | 3 | SBY2 | C |
| Public IP pair #3 | 300 | Tunnel IP #30 | 1.1.3.0/24 | 1 | SBY2 | A |
| | 200 | Tunnel IP #31 | 1.1.3.0/24 | 2 | SBY1 | B |
| | 100 | Tunnel IP #32 | 1.1.3.0/24 | 3 | ACT | C |

With the configurations in Fig. 14 and table 9, when subscriber #A is accommodated in the public IP pair #1, the tunnel IP #10 is used in a normal operation. When an abnormality occurs in the "tunnel IP #10" (for example, a failure in the CGNAT 20-1), the service(s) is continued by switching the "tunnel IP #12" accommodated in the CGNAT 20-3 to a newly active (ACT) system. In this case, the "tunnel IP #11" accommodated in the CGNAT 20-2 can be operated as a standby (SBY) system. Thus, no maintenance workers need to rush to manage the situation.

### <Variation>

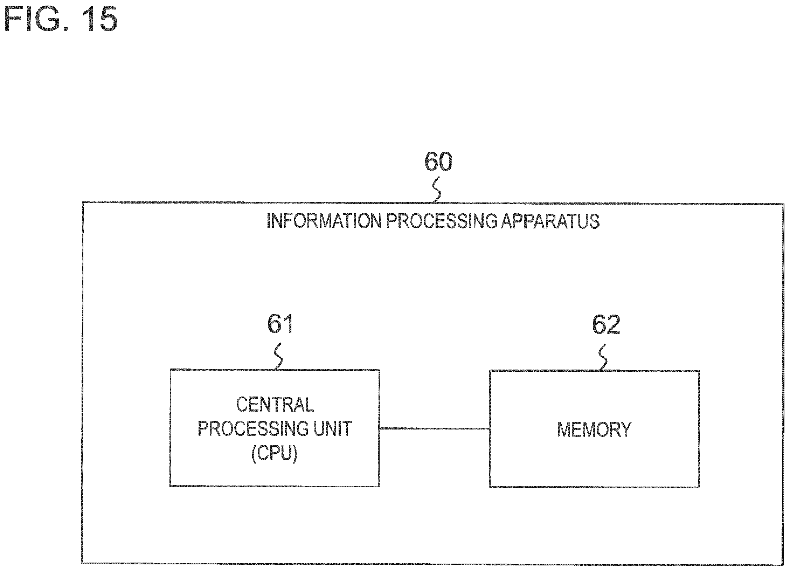

An individual one of the apparatuses (for example, the AGW 10, the CGNATs 20-1 and 20-2, the CTL server 30) arranged in the communication system according to the above exemplary embodiment may include an information processing apparatus 60 illustrated in Fig. 15. The information processing apparatus 60 includes a central processing unit (CPU) 61 and a memory 62. The information processing apparatus 60 may entirely or partially realize the functions of the individual parts of an individual one of these apparatuses (see Fig. 5) by causing the CPU 61 to execute a program stored in the memory 62.

### <Application Example>

For example, the communication system according to the above exemplary embodiment is applicable to BRAS/CGNAT used when a carrier or an ISP (Internet service provider) provides subscribers with Internet access services.

In the disclosure of the present application, the following modes are possible.

### [Mode 1]

See the gateway apparatus according to the above first aspect.

### [Mode 2]

The gateway apparatus according to mode 1;
wherein the plurality of network address translation apparatuses includes pools for redundantly storing the global IP address(es) in the plurality of network address translation apparatuses; and
wherein the selection part selects a network address translation apparatus having a pool whose priority is relatively high from the plurality of network address translation apparatuses.

### [Mode 3]

The gateway apparatus according to mode 2;
wherein the gateway apparatus includes a monitoring part that monitors whether the plurality of network address translation apparatuses is alive; and
wherein, when a failure occurs in a network address translation apparatus having a pool whose priority is relatively high, the selection part selects a network address translation apparatus having a pool whose priority is relatively low.

### [Mode 4]

The gateway apparatus according to mode 2 or 3, including a storage part that stores organization-specific information that identifies a set of pools redundantly storing the same global IP address and subscriber identification information in association with each other.

### [Mode 5]

The gateway apparatus according to mode 4;
wherein the selection part selects one network address translation apparatus from a plurality of network address translation apparatuses including pools corresponding to organization-specific information associated with subscriber identification information of the subscriber(s); and
wherein the forwarding part forwards the packet(s) into which the subscriber identification information has been inserted to the selected network address translation apparatus.

### [Mode 6]

See the above network address translation apparatus according to the above second aspect.

### [Mode 7]

The network address translation apparatus according to mode 6;
wherein the storing part includes a pool(s) storing the global IP address(es); and
wherein priorities are supplied to a plurality of pools that the plurality of network address translation apparatuses include for redundantly storing the global IP address(es).

### [Mode 8]

The network address translation apparatus according to mode 7; wherein the storing part stores a global IP address(es) and subscriber identification information in association with each other in the pools.

### [Mode 9]

The network address translation apparatus according to mode 8; wherein the translation part translates an address(es) of the packet(s) by using a global IP address(es) associated with subscriber identification information inserted by the gateway apparatus into the packet(s).

### [Mode 10]

See the communication system according to the above third aspect.

### [Mode 11]

The communication system according to mode 10;
wherein the plurality of network address translation apparatuses includes pools for redundantly storing the global IP address(es) in the plurality of network address translation apparatuses; and
wherein the gateway apparatus selects a network address translation apparatus having a pool whose priority is relatively high from the plurality of network address translation apparatuses and forwards the packet(s) to the selected network address translation apparatus.

### [Mode 12]

The communication system according to mode 11;
wherein the gateway apparatus monitors whether the plurality of network address translation apparatuses are alive; and
wherein, when a failure occurs in a network address translation apparatus having a pool whose priority is relatively high, the gateway apparatus selects a network address translation apparatus having a pool whose priority is relatively low and forwards the packet(s) to the selected network address translation apparatus.

### [Mode 13]

The communication system according to mode 11 or 12;
wherein the plurality of network address translation apparatuses store a global IP address(es) and subscriber identification information in association with each other in the pools; and
wherein the gateway apparatus stores organization-specific information that identifies a set of pools redundantly storing the same global IP address and subscriber identification information in association with each other.

### [Mode 14]

The communication system according to mode 13;
wherein the gateway apparatus inserts subscriber identification information of the subscriber(s) in the packet(s), selects one network address translation apparatus from a plurality of network address translation apparatuses including pools corresponding to organization-specific information associated with the subscriber identification information of the subscriber(s), and forwards the packet(s) into which the subscriber identification information has been inserted to the selected network address translation apparatus.

### [Mode 15]

The communication system according to mode 14;
wherein the plurality of network address translation apparatuses translates an address(es) of the packet(s) by using a global IP address(es) associated with subscriber identification information inserted by the gateway apparatus into the packet(s).

### [Mode 16]

See the communication method according to the above fourth aspect.

### [Mode 17]

The communication method according to mode 16;
wherein the plurality of network address translation apparatuses includes pools for redundantly storing the global IP address(es) in the plurality of network address translation apparatuses; and
wherein the gateway apparatus selects a network address translation apparatus having a pool whose priority is relatively high from the plurality of network address translation apparatuses.

### [Mode 18]

The communication method according to mode 17, including a step of causing the gateway apparatus to monitor whether the plurality of network address translation apparatuses is alive; and
wherein, when a failure occurs in a network address translation apparatus having a pool whose priority is relatively high, the gateway apparatus selects a network address translation apparatus having a pool whose priority is relatively low.

### [Mode 19]

The communication method according to mode 17 or 18, including a step of causing the gateway apparatus to store organization-specific information that identifies a set of pools redundantly storing the same global IP address and subscriber identification information in association with each other.

### [Mode 20]

The communication method according to mode 19;
wherein the gateway apparatus selects one network address translation apparatus from a plurality of network address translation apparatuses including pools corresponding to organization-specific information associated with subscriber identification information of the subscriber(s) and forwards the packet(s) into which the subscriber identification information has been inserted to the selected network address translation apparatus.

### [Mode 21]

See the communication method according to the above fifth aspect.

### [Mode 22]

The communication method according to mode 21;
wherein the individual network address translation apparatus includes a pool(s) storing the global IP address(es); and
wherein priorities are supplied to a plurality of pools that the plurality of network address translation apparatuses include for redundantly storing the global IP address(es).

### [Mode 23]

The communication method according to mode 22, including a step of causing the individual network address translation apparatus to store a global IP address(es) and subscriber identification information in association with each other in the pools.

### [Mode 24]

The communication method according to mode 23;
wherein the individual network address translation apparatus translates an address(es) of the packet(s) by using a global IP address(es) associated with subscriber identification information inserted by the gateway apparatus into the packet(s).

### [Mode 25]

A communication method, including steps of:
causing a network address translation apparatus to redundantly store a global IP address(es) allocated to a terminal(s) of a subscriber(s); and
causing a gateway apparatus to forward a packet(s) received from the terminal(s) to a network address translation apparatus selected from the plurality of network address translation apparatuses.

### [Mode 26]

See the program according to the above sixth aspect.

### [Mode 27]

A program, causing a computer in a network address translation apparatus to perform:
processing for redundantly storing a global IP address(es) allocated to a terminal(s) of a subscriber(s) in different network address translation apparatuses;
a step of receiving, from a gateway apparatus that forwards a packet(s) received from the terminal(s) to a network address translation apparatus selected from a plurality of network address translation apparatuses redundantly storing the global IP address(es), the packet(s); and
a step of converting an address(es) of the packet(s) by using the global IP address(es).

The disclosure of each of the above PTLs is incorporated herein by reference thereto. Variations and adjustments of the exemplary embodiment(s) are possible within the scope of the overall disclosure (including the claims) of the present invention and based on the basic technical concept of the present invention. Various combinations and selections of various disclosed elements (including the elements in the claims, exemplary embodiment(s), drawings, etc.) are possible within the scope of the entire disclosure of the present invention. Namely, the present invention of course includes various variations and modifications that could be made by those skilled in the art according to the overall disclosure including the claims and the technical concept. The description discloses numerical value ranges. However, even if the description does not particularly disclose arbitrary numerical values or small ranges included in the ranges, these values and ranges should be deemed to have been specifically disclosed.

### REFERENCE SIGNS LIST

- 10: AGW
- 11: selection part
- 12: forwarding part
- 13: storage part
- 14: monitoring part
- 20-1 to 20-4: CGNAT
- 21: storing part
- 22: translation part
- 23: advertisement part
- 24: response part
- 30: CTL server
- 31: storage part
- 32: setting part
- 40: L2CPE
- 50: router
- 60: information processing apparatus
- 61: central processing unit (CPU)
- 62: memory
- 90-1 to 90-4: CGNAT
- 100: gateway apparatus
- 101: selection part
- 102: forwarding part
- 200, 200-1, 200-2: network address translation apparatus
- 201: storing part
- 202: translation part

## Claims

1. A gateway apparatus, comprising:
a selection part that selects one network address translation apparatus from a plurality of network address translation apparatuses redundantly storing a global IP (Internet Protocol) address(es) allocated to a terminal(s) of a subscriber(s); and
a forwarding part that forwards a packet(s) received from the terminal(s) to the selected network address translation apparatus.

2. The gateway apparatus according to claim 1;
wherein the plurality of network address translation apparatuses includes pools for redundantly storing the global IP address(es) in the plurality of network address translation apparatuses; and
wherein the selection part selects a network address translation apparatus having a pool whose priority is relatively high from the plurality of network address translation apparatuses.

3. The gateway apparatus according to claim 2;
wherein the gateway apparatus comprises a monitoring part that monitors whether the plurality of network address translation apparatuses is alive; and
wherein, when a failure occurs in a network address translation apparatus having a pool whose priority is relatively high, the selection part selects a network address translation apparatus including a pool whose priority is relatively low.

4. The gateway apparatus according to claim 2 or 3, comprising a storage part that stores organization-specific information that identifies a set of pools redundantly storing the same global IP address and subscriber identification information in association with each other.

5. The gateway apparatus according to claim 4;
wherein the selection part selects one network address translation apparatus from a plurality of network address translation apparatuses including pools corresponding to organization-specific information associated with subscriber identification information of the subscriber(s); and
wherein the forwarding part forwards the packet(s) into which the subscriber identification information has been inserted to the selected network address translation apparatus.

6. A network address translation apparatus, comprising:
a storing part that redundantly stores a global IP (Internet Protocol) address(es) allocated to a terminal(s) of a subscriber(s) with a different network address translation apparatus(es); and
a translation part that receives, from a gateway apparatus that forwards a packet(s) received from the terminal(s) to a network address translation apparatus selected from a plurality of network address translation apparatuses redundantly storing the global IP address(es), the packet(s) and converts an address(es) of the packet(s) by using the global IP address(es).

7. A communication system, comprising:
a plurality of network address translation apparatuses redundantly storing a global IP (Internet Protocol) address(es) allocated to a terminal(s) of a subscriber(s); and
a gateway apparatus that forwards a packet(s) received from the terminal(s) to a network address translation apparatus selected from the plurality of network address translation apparatus(es).

8. A communication method, comprising steps of:
causing a gateway apparatus to select one network address translation apparatus from a plurality of network address translation apparatuses redundantly storing a global IP (Internet Protocol) address(es) allocated to a terminal(s) of a subscriber(s); and
causing the gateway apparatus to forward a packet(s) received from the terminal(s) to the selected network address translation apparatus.

9. A communication method, comprising steps of:
causing a network address translation apparatus to redundantly store a global IP (Internet Protocol) address(es) allocated to a terminal(s) of a subscriber(s) with a different network address translation apparatus(es);
causing the network address translation apparatus to receive, from a gateway apparatus that forwards a packet(s) received from the terminal(s) to a network address translation apparatus selected from a plurality of network address translation apparatuses redundantly storing the global IP address(es), the packet(s); and
causing the network address translation apparatus to convert an address(es) of the packet(s) by using the global IP address(es).

10. A program, causing a computer to perform processing for:
selecting one network address translation apparatus from a plurality of network address translation apparatuses redundantly storing a global IP (Internet Protocol) address(es) allocated to a terminal(s) of a subscriber(s); and
forwarding a packet(s) received from the terminal(s) to the selected network address translation apparatus.
